# EUROPÄISCHE PATENTSCHRIFT

(11) **EP 4 300 882 B1**
(45) Veröffentlichungstag und Bekanntmachung des Hinweises auf die Patenterteilung: **18.09.2024**
(21) Anmeldenummer: 22182024.4
(22) Anmeldetag: 29.06.2022
(51) Int. Cl.: H04L 9/40, H04L 65/00

(54) **VERFAHREN ZUR GESICHERTEN ÜBERMITTLUNG ZEITKRITISCHER DATEN INNERHALB EINES KOMMUNIKATIONSSYSTEMS, KOMMUNIKATIONSSYSTEM UND ADAPTER FÜR ENDGERÄT**
METHOD FOR SECURE TRANSMISSION OF TIME-CRITICAL DATA WITHIN A COMMUNICATION SYSTEM, COMMUNICATION SYSTEM AND ADAPTER FOR END DEVICE
PROCÉDÉ DE TRANSMISSION SÉCURISÉE DES DONNÉES TEMPORELLEMENT CRITIQUES DANS UN SYSTÈME DE COMMUNICATION, SYSTÈME DE COMMUNICATION ET ADAPTATEUR POUR ÉQUIPEMENTS TERMINAUX

(43) Veröffentlichungstag der Anmeldung: 03.01.2024
(73) Patentinhaber: Siemens Aktiengesellschaft, 80333 München (DE)
(72) Erfinder: Aschauer, Hans, 81829 München (DE); Herrmann, Jan, 80999 München (DE); Knebel, Achim, 90765 Fürth (DE); Seltzsam, Stefan, 85653 Aying (DE); Wimmer, Martin, 85579 Neubiberg (DE)
(74) Vertreter: Siemens Patent Attorneys

(56) Entgegenhaltungen:
- EP-B1- 3 646 559
- CN-A- 114 024 706
- ROSE SCOTT ET AL: "Zero trust architecture", NATIONAL INSTITUTE OF STANDARDS AND TECHNOLOGY, 1 February 2020 (2020-02-01), pages 1 - 59, XP093129063, Retrieved from the Internet <URL:https://nvlpubs.nist.gov/nistpubs/SpecialPublications/NIST.SP.800-207.pdf> [retrieved on 20240208], DOI: 10.6028/NIST.SP.800-207

## Beschreibung

Die vorliegende Erfindung betrifft ein Verfahren zur gesicherten Übermittlung zeitkritischer Daten innerhalb eines Kommunikationssystems, insbesondere eines Kommunikationssystems für ein industrielles Automatisierungssystem, ein Kommunikationssystem zur Durchführung des Verfahrens und einen Adapter für ein Endgerät des Kommunikationssystems.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Aus EP 3 646 559 B1 ist ein Verfahren zur Überprüfung von innerhalb eines industriellen Automatisierungssystems mit mehreren Automatisierungszellen übermittelten Datagrammen bekannt, bei dem zu überprüfende Datagramme aus den Automatisierungszellen über eine jeweilige Firewall-Schnittstelle zur Überprüfung an ein Firewall-System übermittelt und dort regelbasiert überprüft werden. Das Firewall-System wird durch zumindest eine innerhalb eines mehrere Rechnereinheiten umfassen-den Datenverarbeitungssystems bereitgestellte virtuelle Maschine gebildet. Zur Übermittlung der zu überprüfenden Data-gramme wird jeweils ein Sicherungsschicht-Tunnel zwischen der jeweiligen Firewall-Schnittstelle und dem Firewall-System aufgebaut. Sowohl zu prüfende Datagramme als auch zumindest erfolgreich überprüfte Datagramme werden innerhalb des jeweiligen Sicherungsschicht-Tunnels übermittelt.

In WO 2020/182627 A1 ist ein Verfahren zur Überwachung der Integrität eines industriellen Cyber-physischen Systems beschrieben, bei dem Messdaten, die mit verschiedenen Sensoren des Cyber-physischen Systems erfasst wurden, bzw. Steuerdaten, die für verschiedene Aktuatoren des Cyber-physischen Systems bestimmt sind, bereitgestellt bzw. abgegriffen werden. Außerdem wird wenigstens ein Messdaten-Zusammenhangsparameter zwischen den mit den verschiedenen Sensoren erfassten Messdaten ermittelt, bzw. es wird wenigstens ein Steuerdaten-Zusammenhangsparameter zwischen den für die verschiedenen Aktuatoren bestimmten Steuerdaten ermittelt. Der wenigstens eine Messdaten-Zusammenhangsparameter wird mit einer Messdaten-Zusammenhangs-Referenz verglichen, bzw. der wenigstens eine Steuerdaten-Zusammenhangsparameter wird mit einer Steuerdaten-Zusammenhangs-Referenz verglichen. Basierend auf dem Vergleich wird die Integrität des zu überwachenden Cyber-physischen Systems beurteilt.

Die ältere europäische Patentanmeldung mit dem Anmeldeaktenzeichen 22175490.6 betrifft eine gesicherten Übermittlung zeitkritischer Daten innerhalb eines Kommunikationssystems, das mehrere lokale Netze, in dem Daten mittels Switching übermittelt werden, zumindest ein gegenüber den lokalen Netzen überlagertes Netz, in dem Daten mittels Routing übermittelt werden, und ein Gateway-System zur Anbindung des Kommunikationssystems an zumindest ein ungesichertes externes Netz umfasst. Netzwerkschicht-Kommunikation über das überlagerte Netz wird nur zwischen authentifizierten Systemkomponenten autorisiert. Switche authentifizieren jeweils angeschlossene Endgeräte und ordnen diese entsprechend einer jeweiligen Endgeräte-Identität einem physikalischen oder logischen lokalen Netz zu. Sicherungsschicht-Kommunikation wird innerhalb der lokalen Netze implizit aufgrund einer Zuordnung der jeweiligen Endgeräte zum selben lokalen Netz autorisiert. Kommunikation auf OSI-Schicht 3-7 zwischen Endgeräten unterschiedlicher lokaler Netze bzw. mit Endgeräten im ungesicherten externen Netz wird mittels Zero Trust-Proxies autorisiert, die jeweils einem lokalen Netz zugeordnet sind.

Zero Trust-Konzepte sehen vor, dass sich Benutzer bzw. Geräte unabhängig von ihrer jeweiligen Position oder Umgebung sich gegenüber Kommunikationspartnern bzw. bei einem Zugriff auf geschützte Ressourcen authentisieren, um nach einer erfolgreichen Authentifizierung beispielsweise auf gewünschte Daten oder Anwendungen zugreifen zu können. In industriellen Automatisierungssystemen ist hinsichtlich einer Anwendung von Zero Trust-Konzepten problematisch, dass nicht jeder Benutzer oder jedes Gerät in der Lage ist, insbesondere unter wirtschaftlichen Aspekten, eine Authentisierung durchführen zu können. Eine Anwendung von Zero Trust-Konzepten erfordert üblicherweise zusätzliche kryptographische Funktionalität (z.B. Trust Anchor) und Schlüsselmaterial (z.B. Gerätezertifikate) bzw. Rechenleistung, die in bestehenden Hardware-Komponenten nicht immer frei zur Verfügung steht. Außerdem können bestehende Sicherheits- oder Kommunikationsprotokolle in industriellen Automatisierungssystemen nicht ohne weiteres zur Umsetzung von Zero Trust-Konzepten angepasst oder ersetzt werden.

Neben Datensicherheit muss in Kommunikationsnetzen von industriellen Automatisierungssystemen auch eine deterministische Datenübermittlung und -verarbeitung sichergestellt sein. In industriellen Automatisierungssystemen ist deterministisches Verhalten insbesondere zur Gewährleistung von funktionaler Sicherheit (safety) erforderlich. Eine entsprechend Zero Trust-Konzepten vorgesehene gegenseitige Authentisierung gegenüber Kommunikationspartnern erschwert jedoch die deterministische Datenübermittlung und -verarbeitung.

Rose Scott ET AL: "Zero trust architecture",National Institute of Standards and Technology, 1. Februar 2020 (2020-02-01), Seiten 1-59, XP0093129063, beschreibt Zero Trust für Unternehmenssicherheitsarchitekten.

Der vorliegenden Erfindung liegt daher die Aufgabe zugrunde, ein einfach in bestehende Kommunikationssysteme integrierbares Verfahren zur gesicherten Übermittlung zeitkritischer Daten zu schaffen, das insbesondere in industriellen Automatisierungssystemen eine gleichzeitige Gewährleistung von Datensicherheit und Determinismus ermöglicht, und eine geeignete Vorrichtung zur technischen Realisierung des Verfahrens anzugeben.

Diese Aufgabe wird erfindungsgemäß durch ein Verfahren mit den in Anspruch 1 angegebenen Merkmalen, durch ein Kommunikationssystem mit den in Anspruch 15 angegebenen Merkmalen und durch einen Adapter mit den in Anspruch 16 angegebenen Merkmalen gelöst. Vorteilhafte Weiterbildungen der vorliegenden Erfindung sind in den abhängigen Patentansprüchen angegeben. Entsprechend dem erfindungsgemäßen Verfahren zur gesicherten Übermittlung zeitkritischer Daten innerhalb eines Kommunikationssystems umfasst das Kommunikationssystem mehrere lokale Netze, eine Steuerungseinheit und ein der Steuerungseinheit zugeordnetes Steuerungsnetz, das von den lokalen Netzen separiert ist. Die lokalen Netze umfassen jeweils zumindest einen Switch und mehrere Endgeräte, wobei die Steuerungseinheit Funktionen mehrerer Switche und Endgeräte steuert. Innerhalb der lokalen Netze wird Kommunikation implizit aufgrund einer Zuordnung der jeweiligen Endgeräte zum selben lokalen Netz autorisiert.

Die Switche der lokalen Netze sind vorzugsweise einem Software Defined Network (SDN) zugeordnet, das eine als Control Plane bezeichnete Kommunikationssteuerungsebene und eine als Data Plane bezeichnete Datenübermittlungsebene umfasst. Dabei ist die Steuerungseinheit der Control Plane zugeordnet, während die Switche der Data Plane zugeordnet sind. Insbesondere können durch die Steuerungseinheit Flow-Tabellen vorgegeben werden, aus denen Routing-Tabellen bzw. Forwarding-Tabellen für der Steuerungseinheit zugeordnete Netzinfrastrukturgeräte abgeleitet werden. Dabei umfassen die Netzinfrastrukturgeräte beispielweise Router bzw. Switche.

Erfindungsgemäß ist jedem Endgerät ein Zero Trust-Adapter zugeordnet, der Statusinformationen des Endgeräts erfasst, die Statusinformationen des Endgeräts über das Steuerungsnetz zur Auswertung an die Steuerungseinheit weiterleitet und das Endgerät gegenüber der Steuerungseinheit bzw. Kommunikationspartnern authentisiert. Die Zero Trust-Adapter können beispielsweise jeweils als Hardware- und/oder Software-Komponente in das jeweilige Endgerät integriert sein. Entsprechend einer alternativen Ausführungsform umfassen die Zero Trust-Adapter jeweils einen in das jeweilige Endgerät integrierten Zero Trust-Agenten, der die Statusinformationen erfasst, und eine vom jeweiligen Endgerät separierte Zero Trust-Schnittstellenvorrichtung, die das Endgerät authentisiert. Darüber hinaus können die Zero Trust-Adapter auch für mehrere Endgeräte in einem gemeinsamen Zero Trust-Proxy zusammengefasst sein.

Die Steuerungseinheit ermittelt für die Endgeräte auf Grundlage der Statusinformationen erfindungsgemäß jeweils eine Vertrauenskennzahl (z.B. trust score) und wendet von der Vertrauenskennzahl abhängige Regeln zur Konfiguration bzw. für zulässige Kommunikationsbeziehungen der Endgeräte an. Entsprechend den durch die Steuerungseinheit angewendeten Regeln werden beispielsweise Kommunikationsbeziehungen der Endgeräte mit Kommunikationspartnern außerhalb ihres jeweiligen lokalen Netzes autorisiert. Insbesondere können die Funktionen der Endgeräte bzw. Switche entsprechend den durch die Steuerungseinheit angewendeten Regeln gesteuert werden. Vorzugsweise erfolgt eine Anwendung der von der Vertrauenskennzahl abhängigen Regeln erst nach einer jeweils erfolgreichen Endgeräteauthentifizierung. Bei einer fehlgeschlagenen Endgeräteauthentifizierung wird vorteilhafterweise jeweils Warnung signalisiert.

Insbesondere durch die Zero Trust-Adapter ermöglicht die vorliegende Erfindung eine aufwandsarme Integration von Zero Trust-Konzepten industrielle Kommunikations- bzw. Automatisierungssysteme. Dies ist insbesondere bei bestehender Infrastruktur vorteilhaft, deren Komponenten nicht ohne weiteres ausgetauscht werden können. Eine nochmals vereinfachte Integration ergibt sich, wenn die Zero Trust-Adapter jeweils einen Trust Anchor zur Speicherung von Adapter- bzw. Endgeräte-spezifischem Schlüsselmaterial umfassen. Außerdem wird durch eine Realisierung von Zero Trust-Kontrollfunktionen innerhalb eines separierten Steuerungsnetzes sichergestellt, dass Funktion und Verhalten eines bestehenden industriellen Kommunikations- bzw. Automatisierungssystems nicht nachteilig beeinflusst bzw. verändert wird. Vorzugsweise sind die Endgeräte hierzu jeweils über einen dedizierten Port an eine Zero Trust-Schnittstellenvorrichtung bzw. an das Steuerungsnetz angebunden.

Entsprechend einer bevorzugten Ausführungsform der vorliegenden Erfindung werden die Statusinformationen durch den jeweiligen Zero Trust-Adapter für die Steuerungseinheit vorverarbeitet. Dabei werden vorteilhafterweise nur die vorverarbeiteten Statusinformationen bzw. aus den Statusinformationen extrahierte Metainformationen zur Auswertung an die Steuerungseinheit weitergeleitet. Die Statusinformationen können insbesondere Log-Dateien umfassen, die durch den jeweiligen Zero Trust-Adapter gesammelt, vorverarbeitet und an die Steuerungseinheit weitergeleitet werden. Auf diese Weise ist eine nochmals genauere Bewertung der Endgeräte hinsichtlich ihres Sicherheitsstatus bzw. etwaiger Sicherheitsrisiken möglich.

Vorzugsweise sind die durch die Steuerungseinheit abhängig von der Vertrauenskennzahl angewendeten Regeln durch Sicherheitsrichtlinien vorgegeben. Diese Sicherheitsrichtlinien definieren, welche Endgeräte bzw. Nutzer Zugriff auf welche Daten und/oder Ressourcen benötigen. Diese ermöglicht eine selektive und effiziente Zugriffssteuerung. Dabei werden die Statusinformationen vorteilhafterweise auf Grundlage der Sicherheitsrichtlinien durch einen der Steuerungseinrichtung zugeordneten Policy Decision Point (PDP) ausgewertet. Eine Durchsetzung der Sicherheitsrichtlinien erfolgt bevorzugt durch die Steuerungseinrichtung als Policy Enforcement Point.

Das erfindungsgemäße Kommunikationssystem ist zur Durchführung eines Verfahrens entsprechend vorangehenden Ausführungen vorgesehen und umfasst mehrere lokalen Netze, die jeweils zumindest einen Switch und mehrere Endgeräte umfassen, eine Steuerungseinheit, die Funktionen mehrerer Switche und Endgeräte steuert, und ein der Steuerungseinheit zugeordnetes Steuerungsnetz, das von den lokalen Netzen separiert ist. Dabei sind die lokalen Netze jeweils dafür ausgestaltet und eingerichtet, dass Kommunikation innerhalb des jeweiligen lokalen Netzes implizit aufgrund einer Zuordnung der jeweiligen Endgeräte zum selben lokalen Netz autorisiert wird.

Den Endgeräten des erfindungsgemäßen Kommunikationssystems ist jeweils ein Zero Trust-Adapter zugeordnet, der dafür ausgestaltet und eingerichtet ist, Statusinformationen des Endgeräts zu erfassen, die Statusinformationen des Endgeräts über das Steuerungsnetz zur Auswertung an die Steuerungseinheit weiterzuleiten und das Endgerät gegenüber der Steuerungseinheit bzw. Kommunikationspartnern zu authentisieren. Demgegenüber ist die Steuerungseinheit dafür ausgestaltet und eingerichtet, für die Endgeräte auf Grundlage der Statusinformationen jeweils eine Vertrauenskennzahl zu ermitteln und von der Vertrauenskennzahl abhängige Regeln zur Konfiguration bzw. für zulässige Kommunikationsbeziehungen der Endgeräte anzuwenden. Vorzugsweise ist das Kommunikationssystem dafür ausgestaltet und eingerichtet, dass Kommunikationsbeziehungen der Endgeräte mit Kommunikationspartnern außerhalb ihres jeweiligen lokalen Netzes entsprechend den durch die Steuerungseinheit angewendeten Regeln autorisiert werden.

Die vorliegende Erfindung wird nachfolgend an einem Ausführungsbeispiel anhand der Zeichnung näher erläutert. Es zeigt
- Figur 1: ein Kommunikationssystem mit einem lokalen Netz, das einen Switch und mehrere Endgeräte umfasst, einem Steuerungsnetz, einer Steuerungseinheit und in die Endgeräte integrierten Zero Trust-Adaptern,
- Figur 2: eine alternative Ausführungsform des Kommunikationssystem gemäß Figur 1 mit nicht vollständig in die Endgeräte integrierten Zero Trust-Adaptern,
- Figur 3: eine Detaildarstellung eines Endgeräts und einer zugeordneten Zero Trust-Schnittstellenvorrichtung des in Figur 2 dargestellten Kommunikationssystems,
- Figur 4: eine beispielhafte Darstellung einer Ermittlung einer Vertrauenskennzahl für mehrere Endgeräte anhand von Statusinformationen,
- Figur 5: beispielhafte von der Vertrauenskennzahl abhängige Regeln, die durch die Steuerungseinheit angewendet werden.

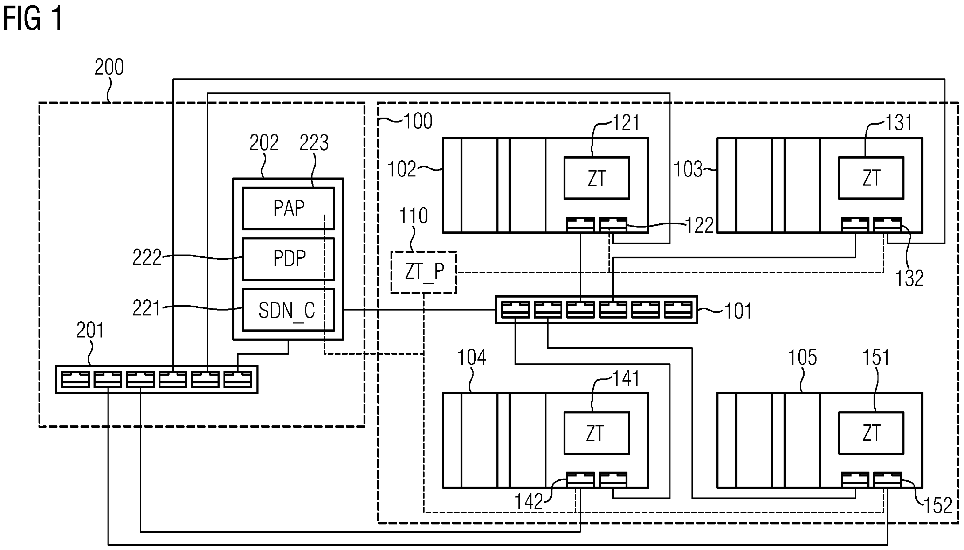

Das in Figur 1 dargestellte Kommunikationssystem weist grundsätzlich mehrere lokale Netze 100, die jeweils einen Switch 101 und mehrere an diesen angeschlossene Endgeräte 102-105 umfassen, eine Steuerungseinheit 202 und ein der Steuerungseinheit 202 zugeordnetes Steuerungsnetz 200 auf. Kommunikation innerhalb der lokalen Netze 100 wird im vorliegenden Ausführungsbeispiel implizit aufgrund einer Zuordnung der jeweiligen Endgeräte 102-105 zum selben lokalen Netz autorisiert. Aus Gründen einer besseren Übersichtlichkeit ist in Figur 1 exemplarisch nur ein lokales Netz 100 dargestellt.

Das Steuerungsnetz 200 ist vorteilhafterweise vollständig von den lokalen Netzen 100 separiert. Hierzu sind die Endgeräte 102-105 jeweils über einen dedizierten Port 122, 132, 142, 152 an das Steuerungsnetz 200 angebunden. In analoger Weise sind die Switche 101 der lokalen Netze 100 jeweils über einen dedizierten Port mit der vom Steuerungsnetz 200 umfassten Steuerungseinheit 202 verbunden.

Die Endgeräte 102-105 sind insbesondere physische oder virtuelle Hosts, die Daten bzw. Ressourcen für andere Hosts bereitstellen können. Die Daten bzw. Ressourcen können beispielsweise Diensten bzw. Steuerungs- und Überwachungsanwendungen eines industriellen Automatisierungssystems zugeordnet sein, die exemplarisch für zeitkritische Dienste bzw. Anwendungen sind.

Im vorliegenden Ausführungsbeispiel implementieren die Endgeräte 102-105 Funktionen von Steuerungsgeräten eines industriellen Automatisierungssystems, wie speicherprogrammierbaren Steuerungen, oder von Feldgeräten, wie Sensoren oder Aktoren. Dabei dienen die Endgeräte 102-105 einem Austausch von Steuerungs- und Messgrößen mit durch Steuerungsgeräte gesteuerten Maschinen oder Vorrichtungen. Insbesondere sind die Steuerungsgeräte für eine Ermittlung geeigneter Steuerungsgrößen aus erfassten Messgrößen vorgesehen.

Alternativ oder zusätzlich können die Endgeräte 102-105 jeweils eine Bedien- und Beobachtungsstation implementieren und zur Visualisierung von Prozessdaten bzw. Mess- und Steuerungsgrößen dienen, die durch Steuerungsgeräte oder andere Automatisierungsgeräte verarbeitet bzw. erfasst werden. Insbesondere kann eine Bedien- und Beobachtungsstation zur Anzeige von Werten eines Regelungskreises und zur Veränderung von Regelungsparametern oder -programmen verwendet werden.

Die Switche 101 der lokalen Netze 100 und die Endgeräte 102-105 sind vorzugsweise einem Software Defined Network (SDN) zugeordnet, das eine als Control Plane bezeichnete Kommunikationssteuerungsebene und eine als Data Plane bezeichnete Datenübermittlungsebene umfasst. Dabei umfasst die Steuerungseinheit 202 einen SDN-Controller 221 und ist der Control Plane zugeordnet, während die Switche 101 und Endgeräte 102 der Data Plane zugeordnet sind. Grundsätzlich können der Data Plane noch andere Netzinfrastrukturgeräte als Switche zugeordnet sein, beispielsweise Router. Durch die Steuerungseinheit 202 können Flow-Tabellen insbesondere für Router bzw. Switche vorgegeben werden, aus denen Routing-Tabellen bzw. Forwarding-Tabellen für der Steuerungseinheit zugeordnete Netzinfrastrukturgeräte abgeleitet werden.

Allgemein steuert die Steuerungseinheit 202 Funktionen mehrerer Switche 101, 201 und Endgeräte 102-105. Entsprechend dem in Figur 1 dargestellten Ausführungsbeispiel ist die Steuerungseinheit 202 über einen dem Steuerungsnetz 200 zugeordneten Switch 201 und über die dedizierten Ports 122, 132, 142, 152 mit den Endgeräten 102-105 bzw. mit Zero Trust-Adaptern 121, 131, 141, 151 verbunden, die jeweils pro Endgerät 102-105 vorgesehen sind. Dabei sind die Zero Trust-Adapter 121, 131, 141, 151 als Hardware- bzw. Software-Komponente, insbesondere als kombinierte Hardware- und Software-Komponente, in das jeweilige Endgerät 102-105 integriert. Alternativ hierzu können die Zero Trust-Adapter für mehrere Endgeräte 102-105 in einem gemeinsamen Zero Trust-Proxy 110 zusammengefasst sein. Dies ist in Figur 1 durch strichlierte Verbindungen zwischen dem Zero Trust-Proxy 110 und den dedizierten Ports 122, 132, 142, 152 der Endgeräte 102-105 angedeutet.

Die Zero Trust-Adapter 121, 131, 141, 151 erfassen jeweils Statusinformationen des zugeordneten Endgeräts 102-105, leiten die Statusinformationen über das Steuerungsnetz 200 zur Auswertung an die Steuerungseinheit 202 weiter und authentisieren das jeweilige Endgerät 102-105 stellvertretend gegenüber der Steuerungseinheit 202 bzw. gegenüber Kommunikationspartnern. Die Statusinformationen können insbesondere Log-Dateien umfassen, die durch den jeweiligen Zero Trust-Adapter 121, 131, 141, 151 gesammelt und an die Steuerungseinheit 202 weitergeleitet werden. Vorzugsweise werden die Statusinformationen durch den jeweiligen Zero Trust-Adapter 121, 131, 141, 151 für die Steuerungseinheit 202 vorverarbeitet. In diesem Fall werden nur die vorverarbeiteten Statusinformationen bzw. aus den Statusinformationen extrahierte Metainformationen zur Auswertung an die Steuerungseinheit 202 weitergeleitet.

Die Steuerungseinheit 202 ermittelt für die Endgeräte 102-105 auf Grundlage der Statusinformationen jeweils eine Vertrauenskennzahl (trust score) und wendet von der Vertrauenskennzahl abhängige Regeln zur Konfiguration bzw. für zulässige Kommunikationsbeziehungen der Endgeräte an. Insbesondere werden Kommunikationsbeziehungen der Endgeräte 102-105 mit Kommunikationspartnern außerhalb ihres jeweiligen lokalen Netzes 100 entsprechend den durch die Steuerungseinheit 202 angewendeten Regeln autorisiert. Darüber hinaus werden auch die Funktionen der Switche 101 der lokalen Netze 100 bzw. der Endgeräte 102-105 entsprechend den durch die Steuerungseinheit 202 angewendeten Regeln gesteuert. Vorzugsweise erfolgt eine Anwendung der von der Vertrauenskennzahl abhängigen Regeln erst nach einer jeweils erfolgreichen Endgeräteauthentifizierung. Bei einer fehlgeschlagenen Endgeräteauthentifizierung kann beispielsweise jeweils Warnung signalisiert werden. Alternativ hierzu kann der SDN-Controller 221 bei einer fehlgeschlagenen Endgeräteauthentifizierung veranlasst werden, Kommunikation des jeweiligen Endgeräts über die Data Plane zu unterbrechen, also aktiv in die Kommunikation einzugreifen.

Die durch die Steuerungseinheit 202 angewendeten Regeln sind insbesondere durch Sicherheitsrichtlinien vorgegeben. Diese Sicherheitsrichtlinien werden im vorliegenden Ausführungsbeispiel mittels eines in die Steuerungseinheit 202 integrierten Policy Administration Point (PAP) 223 verwaltet und definieren, welche Endgeräte bzw. Nutzer Zugriff auf welche Daten bzw. Ressourcen benötigen. Dabei werden die Statusinformationen auf Grundlage der Sicherheitsrichtlinien durch einen Policy Decision Point (PDP) 222 ausgewertet, der von der Steuerungseinrichtung 202 umfasst ist. Eine Durchsetzung der Sicherheitsrichtlinien erfolgt durch den SDN-Controller 221 als Policy Enforcement Point (PEP).

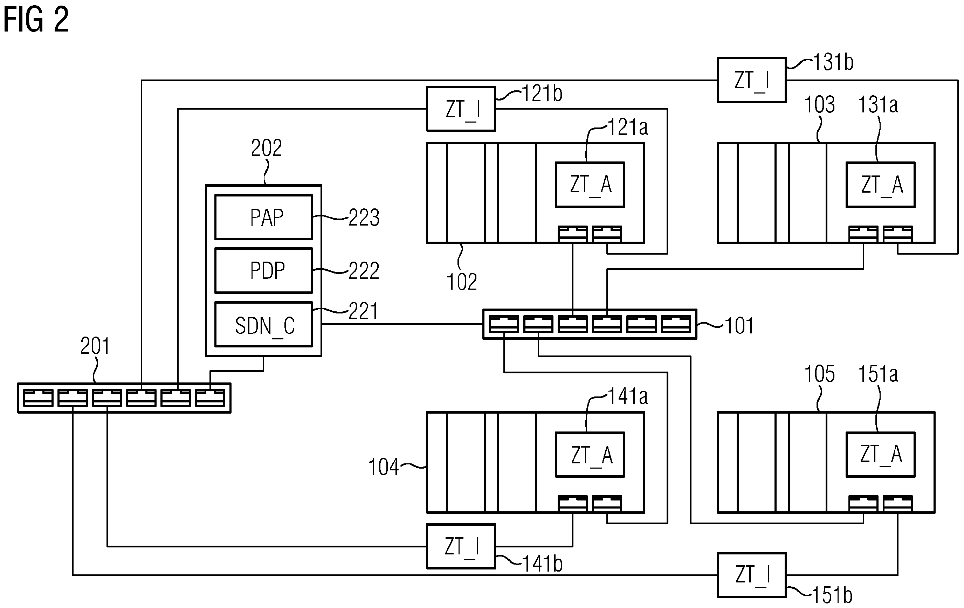

Entsprechend dem in Figur 2 dargestellten alternativen Ausführungsbeispiel ist die Steuerungseinheit 202 über den Switch 201 des Steuerungsnetzes 200 und über Zero Trust-Schnittstellenvorrichtungen 121b, 131b, 141b, 151b mit den dedizierten Ports 122, 132, 142, 152 der Endgeräte 102-105 verbunden. Bei diesem Ausführungsbeispiel sind die Zero Trust-Adapter jeweils in einen in das jeweilige Endgerät 102-105 integrierten Zero Trust-Agenten 121a, 131a, 141a, 151a, der die Statusinformationen erfasst, und eine vom jeweiligen Endgerät 102-105 separierte Zero Trust-Schnittstellenvorrichtung 121b, 131b, 141b, 151b unterteilt, die das Endgerät 102-105 authentisiert.

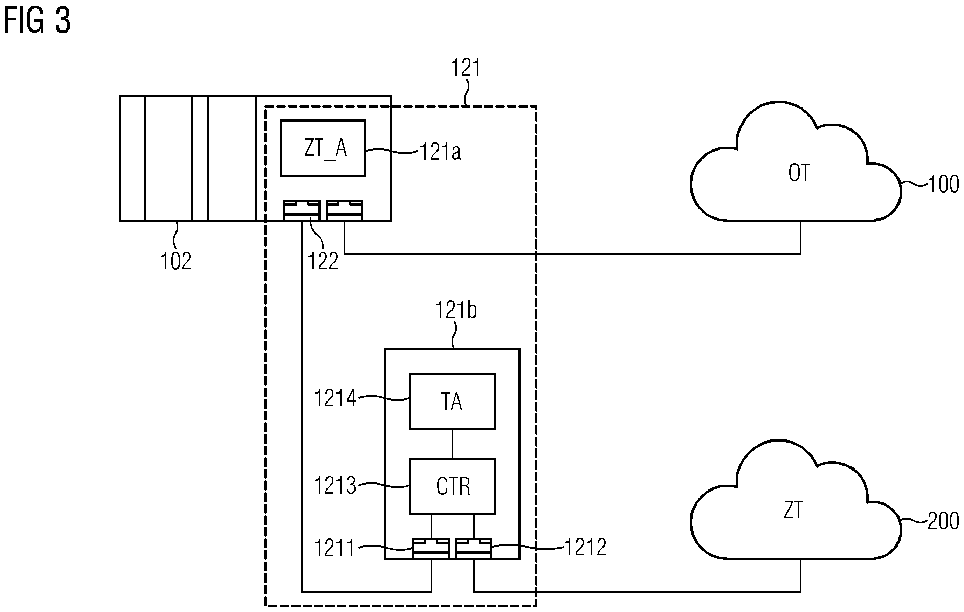

In Figur 3 sind ein Endgerät 102 und eine Zero Trust-Schnittstellenvorrichtung 121b des Kommunikationssystem gemäß Figur 2 exemplarisch im Detail dargestellt. Neben einem dedizierten Port 1211 für das zugeordnete Endgerät 102, einem dedizierten Port 1212 für das Steuerungsnetz 200 und einem Steuerungsmodul 1213 umfasst die Zero Trust-Schnittstellenvorrichtung 121b einen Trust Anchor 1214 zur Speicherung von Adapter- bzw. Endgeräte-spezifischem Schlüsselmaterial. Ein solcher Trust Anchor kann auch in die Zero Trust-Adapter 121, 131, 141, 151 des in Figur 1 dargestellten Kommunikationssystems integriert sein. Insgesamt braucht Schlüsselmaterial für eine Authentisierung der Endgeräte 102-105 nicht dort hinterlegt zu werden, sondern kann sicher durch den jeweils zugeordneten Zero Trust-Adapter Adapter 121, 131, 141, 151 bzw. die jeweilige Zero Trust-Schnittstellenvorrichtung 121b, 131b, 141b, 151b verwaltet werden.

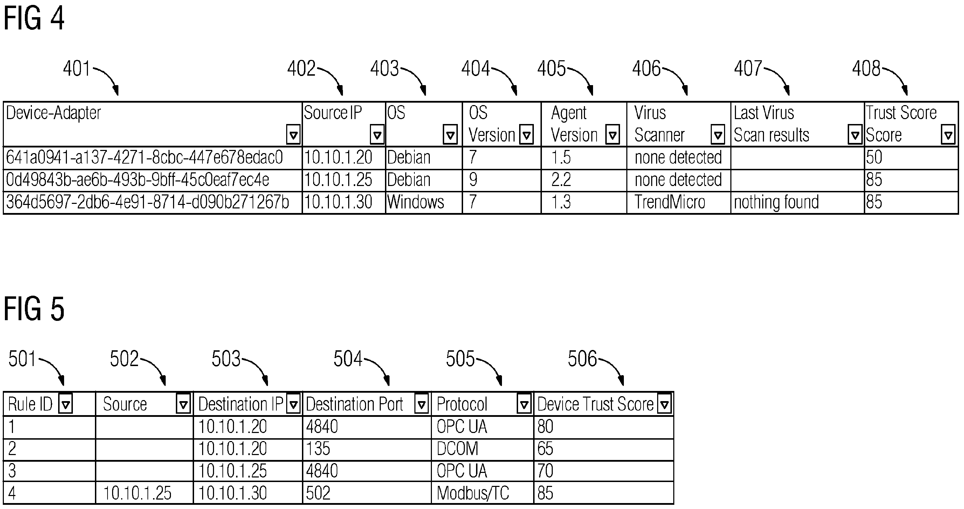

Zur Ermittlung einer Vertrauenskennzahl (trust score) anhand von Statusinformationen für mehrere beispielhafte Endgeräte können entsprechend Figur 4 einerseits Netzwerk-Konfigurationsdaten, wie Netzwerkadapter-ID 401 und IP-Adresse 402, und andererseits Software-Installationsdaten, wie Betriebssystem 403, Betriebssystem-version 404, Software-Version 405 des jeweiligen Zero Trust-Adapters bzw. Zero Trust-Agenten, installierter Virus-Scanner 406 und letzte Scan-Ergebnisse 407, ausgewertet werden. Auf Basis dieser Daten wird die Vertrauenskennzahl 408 für das jeweilige Endgerät berechnet. Im vorliegenden Ausführungsbeispiel wird für ein erstes Endgerät aufgrund einer älteren Betriebssystemversion eine relative niedrige Vertrauenskennzahl von 50 berechnet, während für ein zweites Endgerät mit einer neueren Betriebssystemversion eine höhere Vertrauenskennzahl von 85 ermittelt wird. Für ein drittes Endgerät mit einer älteren Betriebssystemversion, aber mit einem installierten Virus-Scanner und positivem letzten Scan-Ergebnis kann ebenfalls eine höhere Vertrauenskennzahl von 85 berechnet werden. Eine Berechnungsweise der Vertrauenskennzahl ist grundsätzlich an individuelle Anwendungsanforderungen anpassbar.

In Figur 5 sind beispielhaft vier von der Vertrauenskennzahl abhängige Regeln dargestellt, die durch die Steuerungseinheit angewendet werden. Hierbei sind jeweils eine Regel-ID 501, Quell-IP-Adressen 502, Ziel-IP-Adressen 503, Ziel-Ports 504, durch die jeweilige Regel zugelassene Kommunikationsprotokolle 505 und ein Vertrauenskennzahl-Schwellwert 506 zu beachten. Entsprechend Regel 1 dürfen Endgeräte, deren ermittelte Vertrauenskennzahl zumindest 80 beträgt, mit einem Endgerät mit der IP-Adresse 10.10.1.20 über das Kommunikationsprotokoll OPC UA und den Ziel-Port 4840 kommunizieren. Demgegenüber dürfen Endgeräte, deren ermittelte Vertrauenskennzahl zumindest 65 beträgt, entsprechend Regel 2 mit dem Endgerät mit der IP-Adresse 10.10.1.20 lediglich über das Kommunikationsprotokoll DCOM und den Ziel-Port 135 kommunizieren.

Entsprechend Regel 3 dürfen Endgeräte, deren ermittelte Vertrauenskennzahl zumindest 70 beträgt, mit einem Endgerät mit der IP-Adresse 10.10.1.25 über das Kommunikationsprotokoll OPC UA und den Ziel-Port 4840 kommunizieren. Darüber hinaus sieht Regel 4 beispielsweise vor, dass Kommunikation zwischen dem Endgerät mit der IP-Adresse 10.10.1.25 und einem Endgerät mit der IP-Adresse 10.10.1.30 über das Kommunikationsprotokoll OPC UA und den Ziel-Port 4840 zulässig ist, sofern die berechnete Vertrauenskennzahl für das Endgerät mit der IP-Adresse 10.10.1.25 zumindest 85 beträgt.

Entsprechend obigen Regel wird Kommunikation für Endgeräte mit niedrigeren berechneten Vertrauenskennzahlen als der jeweilige Vertrauenskennzahl-Schwellwert grundsätzlich blockiert. Zur Vermeidung von Konflikten zwischen den Regeln wird ihre Anwendung vorteilhafterweise entsprechend der Regel-ID priorisiert. Auch die durch die Steuerungseinheit angewendeten Regeln sind grundsätzlich an individuelle Anwendungsanforderungen anpassbar.

## Patentansprüche

1. Verfahren zur gesicherten Übermittlung zeitkritischer Daten innerhalb eines Kommunikationssystems, bei dem
- das Kommunikationssystem mehrere lokale Netze (100), die jeweils zumindest einen Switch (101) und mehrere Endgeräte (102-105) umfassen, eine Steuerungseinheit (202), die Funktionen mehrerer Switche und Endgeräte steuert, und ein der Steuerungseinheit zugeordnetes Steuerungsnetz (200) umfasst, das von den lokalen Netzen separiert ist,
- Kommunikation innerhalb der lokalen Netze implizit aufgrund einer Zuordnung der jeweiligen Endgeräte zum selben lokalen Netz autorisiert wird,
- jedem Endgerät ein Zero Trust-Adapter (121, 131, 141, 151) zugeordnet ist, der Statusinformationen des Endgeräts erfasst, die Statusinformationen über das Steuerungsnetz zur Auswertung an die Steuerungseinheit weiterleitet und das Endgerät gegenüber der Steuerungseinheit und/oder Kommunikationspartnern authentisiert, **dadurch gekennzeichnet, dass**:
- die Steuerungseinheit für die Endgeräte auf Grundlage der Statusinformationen jeweils eine Vertrauenskennzahl ermittelt und von der Vertrauenskennzahl abhängige Regeln zur Konfiguration und/oder für zulässige Kommunikationsbeziehungen der Endgeräte anwendet.

2. Verfahren nach Anspruch 1,
bei dem Kommunikationsbeziehungen der Endgeräte (102-105) mit Kommunikationspartnern außerhalb ihres jeweiligen lokalen Netzes (100) entsprechend den durch die Steuerungseinheit (202) angewendeten Regeln autorisiert werden.

3. Verfahren nach einem der Ansprüche 1 oder 2,
bei dem die Statusinformationen durch den jeweiligen Zero Trust-Adapter (121, 131, 141, 151) für die Steuerungseinheit vorverarbeitet (202) werden und bei dem nur die vorverarbeiteten Statusinformationen und/oder aus den Statusinformationen extrahierte Metainformationen zur Auswertung an die Steuerungseinheit weitergeleitet werden.

4. Verfahren nach einem der Ansprüche 1 bis 3,
bei dem die Endgeräte (102-105) jeweils über einen dedizierten Port (122, 132, 142, 152) an eine Zero Trust-Schnittstellenvorrichtung (121b, 131b, 141b, 151b) und/oder an das Steuerungsnetz (200) angebunden sind.

5. Verfahren nach einem der Ansprüche 1 bis 4,
bei dem die Zero Trust-Adapter (121, 131, 141, 151) jeweils als Hardware- und/oder Software-Komponente in das jeweilige Endgerät (102-105) integriert sind.

6. Verfahren nach einem der Ansprüche 1 bis 4,
bei dem die Zero Trust-Adapter jeweils einen in das jeweilige Endgerät (102-105) integrierten Zero Trust-Agenten (121a, 131a, 141a, 151a), der die Statusinformationen erfasst, und eine vom jeweiligen Endgerät separierte Zero Trust-Schnittstellenvorrichtung (121b, 131b, 141b, 151b) umfasst, die das Endgerät authentisiert.

7. Verfahren nach einem der Ansprüche 1 bis 4,
bei dem die Zero Trust-Adapter für mehrere Endgeräte (102-105) in einem gemeinsamen Zero Trust-Proxy (110) zusammengefasst sind.

8. Verfahren nach einem der Ansprüche 1 bis 7,
bei dem die Zero Trust-Adapter jeweils einen Trust Anchor zur Speicherung von Adapter- und/oder Endgeräte-spezifischem Schlüsselmaterial umfassen.

9. Verfahren nach einem der Ansprüche 1 bis 8,
bei dem die Regeln durch Sicherheitsrichtlinien vorgegeben sind, die definieren, welche Endgeräte und/oder Nutzer Zugriff auf welche Daten und/oder Ressourcen benötigen.

10. Verfahren nach Anspruch 9,
bei dem die Statusinformationen auf Grundlage der Sicherheitsrichtlinien durch einen der Steuerungseinrichtung zugeordneten Policy Decision Point ausgewertet werden und bei dem durch die Steuerungseinrichtung als Policy Enforcement Point eine Durchsetzung der Sicherheitsrichtlinien erfolgt.

11. Verfahren nach einem der Ansprüche 1 bis 10,
bei dem die Funktionen der Endgeräte und/oder Switche entsprechend den durch die Steuerungseinheit angewendeten Regeln gesteuert werden.

12. Verfahren nach einem der Ansprüche 1 bis 11,
bei dem eine Anwendung der von der Vertrauenskennzahl abhängigen Regeln erst nach einer jeweils erfolgreichen Endgeräteauthentifizierung erfolgt und bei dem bei einer fehlgeschlagenen Endgeräteauthentifizierung jeweils Warnung signalisiert wird.

13. Verfahren nach einem der Ansprüche 1 bis 12,
bei dem die Switche (101) der lokalen Netze (100) einem Software Defined Network zugeordnet sind, das eine als Control Plane bezeichnete Kommunikationssteuerungsebene und eine als Data Plane bezeichnete Datenübermittlungsebene umfasst, bei dem die Steuerungseinheit (202) der Control Plane zugeordnet ist und bei dem die Switche (101) der Data Plane zugeordnet sind.

14. Verfahren nach Anspruch 13,
bei dem durch die Steuerungseinheit (202) Flow-Tabellen vorgebbar sind, aus denen Routing-Tabellen und/oder Forwarding-Tabellen für der Steuerungseinheit zugeordnete Netzinfrastrukturgeräte (101) abgeleitet werden und bei dem die Netzinfrastrukturgeräte Router und/oder Switche umfassen.

15. Kommunikationssystem zur gesicherten Übermittlung zeitkritischer Daten mit
- mehreren lokalen Netzen (100), die jeweils zumindest einen Switch (101) und mehrere Endgeräte (102-105) umfassen, einer Steuerungseinheit (202), die Funktionen mehrerer Switche und Endgeräte steuert, und einem der Steuerungseinheit zugeordneten Steuerungsnetz (200), das von den lokalen Netzen separiert ist,
- wobei die lokalen Netze jeweils dafür ausgestaltet und eingerichtet sind, dass Kommunikation innerhalb des jeweiligen lokalen Netzes implizit aufgrund einer Zuordnung der jeweiligen Endgeräte zum selben lokalen Netz autorisiert wird,
- wobei den Endgeräten jeweils ein Zero Trust-Adapter (121, 131, 141, 151) zugeordnet ist, der dafür ausgestaltet und eingerichtet ist, Statusinformationen des Endgeräts zu erfassen, die Statusinformationen über das Steuerungsnetz zur Auswertung an die Steuerungseinheit weiterzuleiten und das Endgerät gegenüber der Steuerungseinheit und/oder Kommunikationspartnern zu authentisieren,
- **dadurch gekennzeichnet, dass** die Steuerungseinheit dafür ausgestaltet und eingerichtet ist, für die Endgeräte auf Grundlage der Statusinformationen jeweils eine Vertrauenskennzahl zu ermitteln und von der Vertrauenskennzahl abhängige Regeln zur Konfiguration und/oder für zulässige Kommunikationsbeziehungen der Endgeräte anzuwenden.

16. Adapter für ein Endgerät des Kommunikationssystems nach Anspruch 15,
- wobei der Adapter dafür ausgestaltet und eingerichtet ist, einem Endgerät als Zero Trust-Adapter zugeordnet zu werden und
- wobei der Adapter ferner dafür ausgestaltet und eingerichtet ist, Statusinformationen des Endgeräts zu erfassen, die Statusinformationen des Endgeräts über das Steuerungsnetz zur Auswertung an eine Steuerungseinheit weiterzuleiten und das Endgerät gegenüber der Steuerungseinheit und/oder Kommunikationspartnern zu authentisieren.

## Claims

1. Method for securely transmitting time-critical data within a communication system, in which
- the communication system comprises a plurality of local area networks (100), each comprising at least one switch (101) and a plurality of terminals (102-105), a control unit (202) which controls functions of a plurality of switches and terminals, and a control network (200) which is assigned to the control unit and is separated from the local area networks,
- communication within the local area networks is implicitly authorized on the basis of an assignment of the respective terminals to the same local area network,
- each terminal is assigned a zero trust adapter (121, 131, 141, 151) which captures status information relating to the terminal, forwards the status information via the control network to the control unit for evaluation and authenticates the terminal with respect to the control unit and/or communication partners, **characterized in that**:
- the control unit respectively determines a trust code for the terminals on the basis of the status information and applies rules for configuring and/or for permissible communication relationships between the terminals, which rules are dependent on the trust code.

2. Method according to Claim 1,
in which communication relationships between the terminals (102-105) and communication partners outside their respective local area network (100) are authorized according to the rules applied by the control unit (202).

3. Method according to either of Claims 1 and 2,
in which the status information is preprocessed (202) by the respective zero trust adapter (121, 131, 141, 151) for the control unit, and in which only the preprocessed status information and/or meta information extracted from the status information is forwarded to the control unit for evaluation.

4. Method according to one of Claims 1 to 3,
in which the terminals (102-105) are each connected to a zero trust interface apparatus (121b, 131b, 141b, 151b) and/or to the control network (200) via a dedicated port (122, 132, 142, 152).

5. Method according to one of Claims 1 to 4,
in which the zero trust adapters (121, 131, 141, 151) are each integrated as a hardware and/or software component in the respective terminal (102-105).

6. Method according to one of Claims 1 to 4,
in which the zero trust adapters each comprise a zero trust agent (121a, 131a, 141a, 151a), which is integrated in the respective terminal (102-105) and captures the status information, and a zero trust interface apparatus (121b, 131b, 141b, 151b) which is separated from the respective terminal and authenticates the terminal.

7. Method according to one of Claims 1 to 4,
in which the zero trust adapters for a plurality of terminals (102-105) are combined in a common zero trust proxy (110).

8. Method according to one of Claims 1 to 7,
in which the zero trust adapters each comprise a trust anchor for storing adapter-specific and/or terminal-specific key material.

9. Method according to one of Claims 1 to 8,
in which the rules are predefined by security guidelines which define which terminals and/or users require access to which data and/or resources.

10. Method according to Claim 9,
in which the status information is evaluated on the basis of the security guidelines by way of a policy decision point assigned to the control device, and in which the security guidelines are enforced by the control device as a policy enforcement point.

11. Method according to one of Claims 1 to 10,
in which the functions of the terminals and/or switches are controlled according to the rules applied by the control unit.

12. Method according to one of Claims 1 to 11,
in which the rules that are dependent on the trust code are applied only after respective successful terminal authentication, and in which a warning is signalled in each case if terminal authentication fails.

13. Method according to one of Claims 1 to 12,
in which the switches (101) of the local area networks (100) are assigned to a software defined network comprising a communication control plane, which is referred to as a control plane, and a data transmission plane, which is referred to as a data plane, in which the control unit (202) is assigned to the control plane, and in which the switches (101) are assigned to the data plane.

14. Method according to Claim 13,
in which the control unit (202) can specify flow tables from which routing tables and/or forwarding tables for network infrastructure devices (101) assigned to the control unit are derived, and in which the network infrastructure devices comprise routers and/or switches.

15. Communication system for securely transmitting time-critical data, having
- a plurality of local area networks (100), each comprising at least one switch (101) and a plurality of terminals (102-105), a control unit (202) which controls functions of a plurality of switches and terminals, and a control network (200) which is assigned to the control unit and is separated from the local area networks,
- wherein the local area networks are each configured and set up so that communication within the respective local area network is implicitly authorized on the basis of an assignment of the respective terminals to the same local area network,
- wherein the terminals are each assigned a zero trust adapter (121, 131, 141, 151) which is configured and set up to capture status information relating to the terminal, to forward the status information via the control network to the control unit for evaluation and to authenticate the terminal with respect to the control unit and/or communication partners,
- **characterized in that** the control unit is configured and set up to respectively determine a trust code for the terminals on the basis of the status information and to apply rules for configuring and/or for permissible communication relationships between the terminals, which rules are dependent on the trust code.

16. Adapter for a terminal of the communication system according to Claim 15,
- wherein the adapter is configured and set up to be assigned to a terminal as a zero trust adapter, and
- wherein the adapter is also configured and set up to capture status information relating to the terminal, to forward the status information relating to the terminal via the control network to a control unit for evaluation and to authenticate the terminal with respect to the control unit and/or communication partners.

## Revendications

1. Procédé de transmission sécurisée de données critiques temporellement dans un système de communication, dans lequel
- le système de communication comprend plusieurs réseaux (100) locaux, qui comprennent chacun au moins un switch (101) et plusieurs terminaux (102-105), une unité (202) de commande, qui commande les fonctions de plusieurs switchs et terminaux, et un réseau (200) de commande associé à l'unité de commande, qui est distinct des réseaux locaux,
- une communication dans les réseaux locaux est autorisée implicitement sur la base d'une association des terminaux respectifs au même réseau local,
- à chaque terminal est associé un adaptateur (121, 131, 141, 151) de zéro trust, qui détecte des informations de statut du terminal, achemine les informations de statut en passant par le réseau de commande pour l'évaluation à l'unité de commande et authentifie le terminal par rapport à l'unité de commande et/ou à des partenaires de communication, **caractérisé en ce que** :
- l'unité de commande détermine pour les terminaux, sur la base des informations de statut, respectivement un nombre caractéristique de confiance et applique des règles, qui dépendent des règles caractéristiques de confiance, pour la configuration et/ou pour des relations de communication admissibles des terminaux.

2. Procédé suivant la revendication 1,
dans lequel des relations de communication des terminaux (102-105) avec des partenaires de communication en-dehors de leur réseau (100) local respectif sont autorisées conformément aux règles appliquées par l'unité (202) de commande.

3. Procédé suivant la revendication 1 ou 2,
dans lequel les informations de statut sont prétraitées (202) par l'adaptateur (121, 131, 141, 151) de zéro trust respectif pour l'unité de commande et dans lequel seules les informations de statut prétraitées et/ou des méta-informations extraites des informations de statut sont acheminées pour l'évaluation à l'unité de commande.

4. Procédé suivant l'une des revendications 1 à 3,
dans lequel les terminaux (102-105) sont reliés respectivement par un accès (122, 132, 142, 152) dédié à un dispositif (121b, 131b, 141b, 151b) d'interface de zéro trust et/ou au réseau (200) de commande.

5. Procédé suivant l'une des revendications 1 à 4,
dans lequel les adaptateurs (121, 131, 141, 151) de zéro trust sont intégrés respectivement sous forme de composants matériels et/ou logiciels au terminal (102-105) respectif.

6. Procédé suivant l'une des revendications 1 à 4,
dans lequel l'adaptateur de zéro trust comprend respectivement un agent (121a, 131a, 141a, 151a) de zéro trust, qui est intégré dans le terminal (102-105) respectif et qui détecte les informations de statut, et un dispositif (121b, 131b, 141b, 151b) d'interface de zéro trust distinct du terminal respectif, qui authentifie le terminal.

7. Procédé suivant l'une des revendications 1 à 4,
dans lequel les adaptateurs de zéro trust de plusieurs terminaux (102-105) sont rassemblés en un proxy (110) commun de zéro trust.

8. Procédé suivant l'une des revendications 1 à 7,
dans lequel les adaptateurs de zéro trust comprennent respectivement une ancre de trust pour la mise en mémoire de matériaux de clés spécifiques aux adaptateurs et/ou aux terminaux.

9. Procédé suivant l'une des revendications 1 à 8,
dans lequel les règles sont prescrites par des directives de sécurité, qui définissent quels terminaux et/ou utilisateurs ont besoin d'accéder à quelles données et/ou ressources

10. Procédé suivant la revendication 9,
dans lequel les informations de statuts sont évaluées sur la base des directives de sécurité par un policy decision point appartenant au dispositif de commande et dans lequel il s'effectue, par le dispositif de commande, comme policy enforcement point, une mise en œuvre des directives de sécurité.

11. Procédé suivant l'une des revendications 1 à 10,
dans lequel les fonctions des terminaux et/ou des switchs sont commandés conformément aux règles appliquées par l'unité de commande.

12. Procédé suivant l'une des revendications 1 à 11,
dans lequel une application des règles en fonction du nombre caractéristique de confiance n'a lieu qu'après une authentification de terminal respective de terminaux couronnée de succès et, si une authentification de terminaux est en échec, un avertissement respectif est signalé.

13. Procédé suivant l'une des revendications 1 à 12,
dans lequel les switchs (101) des réseaux (100) locaux sont associés à un software defined network, qui comprend un plan de commande de qualification qualifié de control plane et un plan de transmission de données qualifié de data plane, dans lequel l'unité (202) de commande est associée au control plane et dans lequel les switchs (101) sont associés au data plane.

14. Procédé suivant la revendication 13,
dans lequel, par l'unité (202) de commande, peuvent être prescrits des tableaux de flux, à partir desquels des tableaux de routing et/ou des tableaux de forwarding sont déduits pour des appareils (101) d'infrastructure de réseau associés à l'unité de commande et dans lequel les appareils d'infrastructure de réseau comprennent des routeurs et/ou des switchs.

15. Système de communication pour la transmission sécurisée de données critiques temporellement comprenant
- plusieurs réseaux (100) locaux , qui comprennent chacun au moins un switch (101) et plusieurs terminaux (102-105), une unité (202) de commande, qui commande les fonctions de plusieurs switchs et terminaux, et un réseau (200) de commande associé à l'unité de commande, qui est distinct des réseaux locaux,
- dans lequel les réseaux locaux sont conformés et agencés respectivement de manière à autoriser une communication dans le réseau local respectif implicitement sur la base d'une association des terminaux respectifs au même réseau local,
- dans lequel aux terminaux est associé respectivement un adaptateur (121, 131, 141, 151) de zéro trust, qui est conformé et agencé pour détecter des informations de statut du terminal, pour acheminer les informations de statut en passant par le réseau de commande pour l'évaluation à l'unité de commande et pour authentifier le terminal par rapport à l'unité de commande et/ou aux partenaires de communication,
- **caractérisé en ce que**
l'unité de commande est conformée et agencée pour déterminer, pour les terminaux sur la base des informations de statut, respectivement un nombre caractéristique de confiance et pour appliquer des règles, qui dépendent des nombres caractéristiques de confiance pour la configuration et/ou les relations de communication admissibles des terminaux.

16. Adaptateur pour un terminal du système de communication suivant la revendication 15,
- dans lequel l'adaptation est conformé et agencé pour être associé à un terminal comme adaptateur de zéro trust,
- dans lequel l'adaptateur est conformé et agencé en outre pour détecter des informations de statut du terminal, pour acheminer les informations de statut du terminal en passant par le réseau de commande pour l'évaluation à une unité de commande et pour authentifier le terminal par rapport à l'unité de commande et/ou à des partenaires de communication.
